# EUROPÄISCHE PATENTSCHRIFT

(11) **EP 1 266 058 B1**
(45) Veröffentlichungstag und Bekanntmachung des Hinweises auf die Patenterteilung: **13.10.2004**
(21) Anmeldenummer: 01913752.0
(22) Anmeldetag: 13.01.2001
(51) Int. Cl.: D04H 1/46, D04H 3/10, D04H 5/02, D04H 13/00, B32B 5/26

(54) **VERFAHREN UND VORRICHTUNG ZUR HERSTELLUNG VON VERBUNDVLIESSTOFFEN MITTELS HYDRODYNAMISCHER VERNADELUNG**
METHOD AND DEVICE FOR PRODUCING COMPOSITE NONWOVENS BY MEANS OF HYDRODYNAMIC NEEDLING
PROCEDE ET DISPOSITIF DE FABRICATION DE NON-TISSES COMPOSITES A L'AIDE DE L'AIGUILLETAGE HYDRODYNAMIQUE

(30) Priorität: 24.02.2000 DE 10008746
(43) Veröffentlichungstag der Anmeldung: 18.12.2002
(73) Patentinhaber: Fleissner GmbH, 63329 Egelsbach (DE); Orlandi SPA, 21013 Gallarate (IT)
(72) Erfinder: ORLANDI, Vittorio, I-21010 Arsago Seprio (IT)
(74) Vertreter: Neumann, Gerd, Dipl.-Ing.
(86) Internationale Anmeldenummer: PCT/EP2001/000384
(87) Internationale Veröffentlichungsnummer: WO 2001/063032

(56) Entgegenhaltungen:
- EP-A- 0 333 209
- EP-A- 0 540 041
- DE-A- 19 927 785
- US-A- 5 617 618

## Beschreibung

Durch die EP-A-0 333 209 ist es bekannt, elastomere Endlosfasern zusammen mit Woodpulpfasern hydrodynamisch miteinander zu verbinden und dadurch das Verbundvlies zu verfestigen. Bei diesem Verfestigungsverfahren besteht die Gefahr, dass eine große Anzahl der Pulpfasern aus dem System ausgewaschen wird, also Fasern verloren gehen. Außerdem ist in der Praxis festgestellt worden, dass auch die Außenschicht eines solchen Verbundvlieses eine Pillingneigung aufweist, wie es in der WO 90/04066 beschrieben ist. Zur Verbesserung ist nach der EP-A-0 540 041 vorgeschlagen, das Endlosfaservlies vor der Aufgabe der Pulpfasern hydrodynamisch zu behandeln. Dies soll dem Vlies nicht nur eine höhere Festigkeit geben, sondern die Aufnahmefähigkeit des Vlieses für die Pulpfasern, die Flüssigkeitsverteileigenschaften verbessern. Nach dieser Schrift wird dann die Pulpfaser auf das vernadelte Vlies lediglich aufgegeben und dann zur Verbindung mit dem Vlies getrocknet oder mechanisch in das Vlies gedrückt.

Neben einem Vlies hergestellt aus Endlosfasern (Spunbondvlies) kann dieses auch aus Stapelfasern mittels einer Krempel gebildet werden. Hier gelten aber die gleichen Probleme bei der Herstellung eines Kompostivlieses zusammen mit Pulpfasern, nämlich der Pulp fällt und strömt bei der notwendigen Verfestigung mittels der Wasservernadelung durch das Vlies, was den hohen Pulpverlust zur Folge hat. Unter Berücksichtigung der Erkenntnis nach der EP-A-0 540 041 ist es in der Praxis bekannt, das Krempelvlies vor der Aufgabe der Pulpschicht zur Verfestigung mittels der Wasservernadelung zu verdichten. Dies hat aber den Nachteil, dass das Vlies vor der Aufgabe der Pulpschicht nass ist und diese Feuchtigkeit sich beim Auftragsverfahren der Pulpschicht z. B. mittels des air-lay-Verfahrens negativ auswirkt. Beim air-lay-Verfahren wird nämlich unterhalb des Vlieses ein Unterdruck erzeugt, über den natürlich ein gewisser Anteil der Fasern abgeführt wird und in einen Kreislauf gelangt. Diese abgeführten Fasern wären dann ebenfalls feucht oder nass, was wiederum das gleichmäßige Ablegen der Fasern beim air-lay-Verfahren behindert.

Der Erfindung liegt die Aufgabe zugrunde, ein Verfahren und die dazu gehörige Vorrichtung zu finden, mit dem diese Probleme beseitigt werden.

Ausgehend von einem Verfahren zur Herstellung eines Kompositvlieses zur Aufnahme und Speicherung von Flüssigkeiten od. dgl. bestehend aus einem Krempelvlies, das zur Verfestigung behandelt wird, und einer auf das verfestigte Krempelvlies aufgegebenen Zellstoffschicht wie aus Woodpulpfasern, die mit dem Krempelvlies in festen Kontakt gebracht wird, sieht die Erfindung die Lösung für die gestellte Aufgabe darin, dass das Krempelvlies zur Vorverfestigung vor der Beschichtung mit dem superabsorbierenden Material mit Luft beaufschlagt oder kalandriert wird, dann die Schicht aus den Zellstofffasern auf dieses so vorverfestigte oder kalandrierte Krempelvlies aufgegeben und alles miteinander verbunden wird. Die Verfestigung wie mit dem Kalandrieren des Krempelvlieses vor der Weiterverarbeitung verbessert nicht nur die Abriebfestigkeit des Endproduktes, sondern vermindert auch den Pulpverlust beim Wasservernadeln in und durch das Vlies hindurch. Es ist aber zu beachten, dass diese Verfestigung wie Kalandrierung nicht zu stark erfolgt. Ist die Verfestigung zu hoch, sind die Bindepunkte zu vielfältig, dann ist eine Verbindung der Pulpschicht durch die Wasservernadelung mit dem kalandrierten Vlies erschwert. Aus diesem Grunde kann zur Besserung der Pillingneigung das Vlies am Ende des Bindeverfahrens nach dem Trocknen noch einmal kalandriert werden, wodurch eine feste Einbindung aller Oberflächenfasern erreichbar ist. Im Falle eines Vliesproduktes mit nur einer Krempelschicht braucht nur die Walze aufgeheizt zu werden, die der Krempelschicht benachbart ist.

Es ist festzuhalten, dass die Pulpschicht bei diesem Herstellungsverfahren hydrodynamisch mit dem Vlies verbunden wird, ansonsten kann das Produkt wegen einer Schichtbildung in der Praxis nicht bestehen. Besser ist es noch, wenn auf die Pulpschicht ein weiteres vorverfestigtes Krempelfaservlies aufgegeben wird und erst die drei Schichten gemeinsam hydrodynamisch vemadelt werden. Auch dann ist eine Endkalandrierung von Vorteil.

Eine entsprechende Vorrichtung zur Durchführung des Verfahrens ist in der Zeichnung schematisch dargestellt: Es zeigen:
- Fig. 1: In der Seitenansicht eine Kontinueanlage zur Herstellung eines Verbundvlieses nur mit einem Krempelvlies als Trägerunterlage und
- Fig. 2: ebenfalls in der Seitenansicht die Anlage nach Fig. 1 ergänzt durch die Zuführung einer zusätzlichen Deckschicht aus einem Krempelfaservlies vor der Wasservernadelung.

Zunächst ist das Trägervlies aus den Polyesterfasern und/oder Polypropylenfasern od. dgl. herzustellen. Dazu dient als Vlieslegeeinrichtung eine Krempel 1 - 4. Die Krempel besteht aus einem Kastenspeiser 1 mit einer darunter angeordneten Schüttelrutsche 2, die die gleichmäßig über die Breite ausgebreiteten Fasern der Krempel mit den Kratz- und Reißwalzen 3 übergibt. Das folgende Endlosband 4 übergibt das gelegte Krempelvlies an eine Kalandereinrichtung 5, die hier aus einem einfachen Walzenpaar dargestellt ist. Die Kalandereinrichtung kann auch durch eine hier nicht dargestellte Luftverfestigungseinrichtung ersetzt werden. Das Kalanderwerk 5 kann je nach Wunsch mit Energie und Wärme ein ggf. auch fein geprägtes verfestigtes Vlies liefern. Die Verfestigungswirkung sollte nur gering sein, damit der Pulp mittels der Vernadelung noch eine innige Verbindung mit dem Krempelfaservlies eingeht.

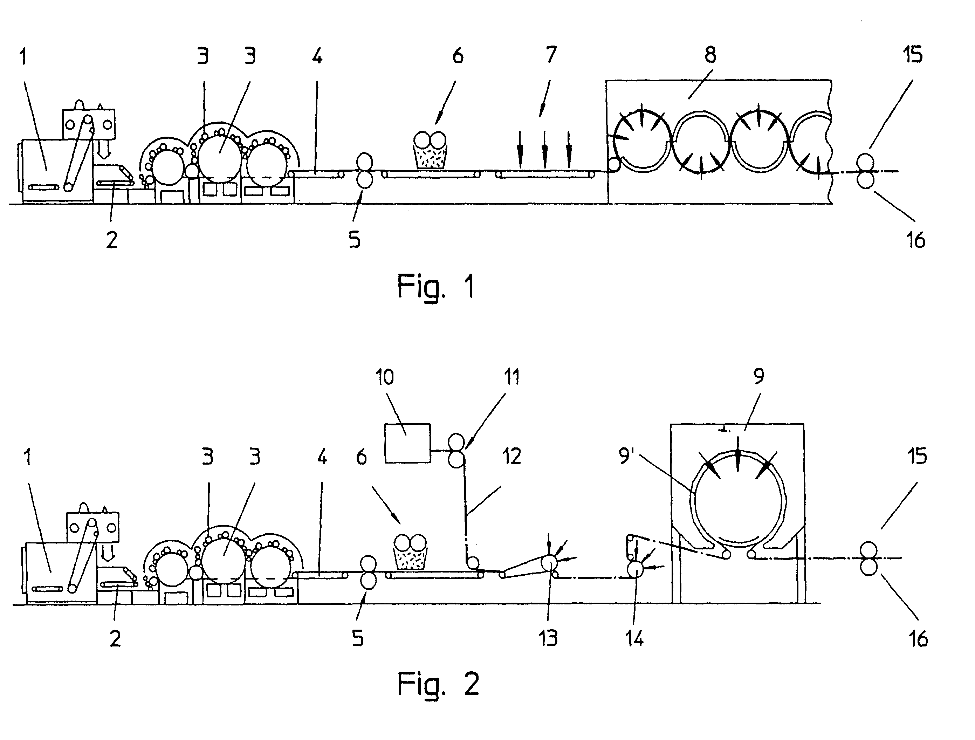

Nach diesem Verfahrensschritt erfolgt wie bekannt die Aufgabe der Pulpfaser z. B. mit einer Vorrichtung 6 nach der EP-A-0 032 772. Beide Vliesschichten zusammen werden dann zur Verbindung mit der hydrodynamischen Vernadelung 7 beaufschlagt, die statt auf einem Endlosband gemäß Fig. 1 auch auf einer durchlässigen Trommel gemäß Fig. 2 durchgeführt werden kann. Der Trockenvorgang auf einer Siebtrommelvorrichtung 8, 9 mit Durchbelüftung schließt sich an. Bei der Vorrichtung 8 ist den Siebtrommeln der Ventilator direkt stirnseitig zugeordnet. Letztlich sollte noch eine weiter Kalandrierung 15, 16 erfolgen, hier jedoch eine mit höherer Energie. Die Verfestigung muss so intensiv sein, dass eine höhere, zufriedenstellende Abriebfestigkeit am Endprodukt entsteht. Im Beispiel nach Fig. 1 braucht nur die Walze 16, die auf dem Krempelvlies aufliegt, beheizt zu werden.

Die Kontinueanlage nach Fig. 2 entspricht der nach Fig. 1, es wird dort nur noch ein zweites, nur leicht vorverfestigtes Krempelfaservlies 12 mit der schematisch dargestellten Krempel 10 erzeugt. Das obere Abdeckvlies 12 sollte ebenfalls mit einem Kalander 11 vorverfestigt sein. Nachdem das Abdeckvlies 12 auf die mit der Einrichtung 6 auf das Grundvlies aus der Vorrichtung 1, 5 aufgelegte Pulpschicht abgelegt ist, erfolgt die genannte Wasservernadelung, die in diesem Ausführungsbeispiel auch von beiden Seiten ggf. auch mehrstufig erfolgen kann, da die Pulpschicht beidseits durch ein Vlies abgedeckt ist. Dazu dienen hintereinander angeordnete Vernadelungstrommeln 13, 14, die mäanderförmig umfahren werden und denen jeweils die mit den Pfeilen angedeuteten Düsenbalken von oben zugeordnet sind. Die sich anschließenden Trocknung erfolgt hier mit einer anderen Art von Durchbeblüftungstrockner 9, dessen Siebtrommel 9' der Ventilator extern zugeordnet ist. Abschließend kann auch hier der Kalander 15, 16 durchlaufen werden, bei dem dann aber beide Walzen 15, 16 zu beheizen sind.

## Patentansprüche

1. Verfahren zur Herstellung eines Kompositvlieses zur Aufnahme und Speicherung von Flüssigkeiten od. dgl. bestehend aus einem Krempelvlies, das zur Verfestigung behandelt wird, und einer auf das verfestigte Krempelvlies aufgegebenen Zellstoffschicht wie aus Woodpulpfasern, die mit dem Krempelvlies in festen Kontakt gebracht wird, **dadurch gekennzeichnet, dass** das Krempelvlies vor der Beschichtung mit dem superabsorbierenden Material trocken vorverfestigt wird, dann die Schicht aus den Zellstofffasern auf dieses vorverfestigte Krempelvlies aufgegeben und alles miteinander verbunden wird.

2. Verfahren nach Anspruch 1, **dadurch gekennzeichnet, dass** die Vorverfestigung mit Pressluft durchgeführt wird.

3. Verfahren nach Anspruch 1, **dadurch gekennzeichnet, dass** die Vorverfestigung durch Kalandrieren erzeugt wird.

4. Verfahren nach Anspruch 1 - 3, **dadurch gekennzeichnet, dass** die Vorverfestigung des Krempelvlieses nur mit leichter Bindung der Fasern des Krempelvlieses durchgeführt wird.

5. Verfahren nach Anspruch 1 oder 4, **dadurch gekennzeichnet, daß** die Verbindung der Zellstofffaserschicht mit dem Krempelvlies mittels hydrodynamischer Vernadelung erzeugt und das Kompositvlies dann getrocknet wird.

6. Verfahren nach einem der Ansprüche 1 - 5, **dadurch gekennzeichnet, daß** auf die Woodpulp-Schicht eine dritte Schicht als Deckschicht aus Krempelfasern aufgebracht und alles zusammen zur Verbindung mittels einer hydrodynamischen Vernadelung beaufschlagt wird.

7. Verfahren nach einem der Ansprüche 1 - 6, **dadurch gekennzeichnet, dass** das getrocknete Kompositvlies erneut kalandriert wird, hier aber mit höherer Energie.

8. Vorrichtung zur Durchführung des Verfahrens nach einem der Ansprüche 1 - 7, **dadurch gekennzeichnet, daß** die Kontinueanlage besteht aus
a) einer Krempel-Vlieslegeeinrichtung (1 - 4),
b) einer Vorverfestigungseinrichtung wie einem Kalander (5),
c) einer ggf. sich unmittelbar anschließenden Einrichtung (6) zur Aufgabe einer Schicht aus Zellstofffasern (Woodpulp) auf das vorverfestigte wie kalandrierte Vlies,
d) einer Wasservernadelungseinrichtung (7),
e) einem Trockner (8) und
f) ggf. einer weiteren Kalandereinrichtung (15, 16).

9. Vorrichtung nach Anspruch 8, **dadurch gekennzeichnet, dass** sie ergänzt ist durch
g) eine Krempel-Vlieslegeeinrichtung (10), für eine weitere
h) ggf. vorverfestigte, kalandrierte Deckschicht (12) auf die unter c) genannte Woodpulpschicht des Kompositvlieses, der sich dann die unter d) genannte Wasservernadelungseinrichtung (7; 13, 14) anschließt.

## Claims

1. Method of producing a composite non-woven fabric for absorbing and storing liquids or the like, said fabric comprising a carded non-woven fabric which is treated for strengthening purposes, and a pulp layer, such as one formed from wood pulp fibres, which is applied to the strengthened carded non-woven fabric and is brought into permanent contact with the carded non-woven fabric, **characterised in that** the carded non-woven fabric is prestrengthened when dry, prior to being coated with the superabsorbent material, then the layer of pulp fibres is applied to this prestrengthened carded non-woven fabric, and everything is interconnected.

2. Method according to claim 1, **characterised in that** the prestrengthening is carried out with compressed air.

3. Method according to claim 1, **characterised in that** the prestrengthening is achieved by calendering.

4. Method according to claims 1 - 3, **characterised in that** the prestrengthening of the carded non-woven fabric is carried out with a slight bonding of the fibres of the carded non-woven fabric.

5. Method according to claim 1 or 4, **characterised in that** the connection between the pulp fibre layer and the carded non-woven fabric is achieved by means of a hydrodynamic needle-punching operation, and the composite non-woven fabric is then dried.

6. Method according to one of claims 1 - 5, **characterised in that** a third layer is applied to the wood pulp layer as a cover layer formed from carded fibres, and everything is acted upon together to achieve the connection by means of a hydrodynamic needle-punching operation.

7. Method according to one of claims 1 - 6, **characterised in that** the dried composite non-woven fabric is calendered afresh, but with greater energy here.

8. Apparatus for accomplishing the method according to one of claims 1 - 7, **characterised in that** the continuous system comprises:
a) a carded non-woven fabric layering arrangement (1 - 4),
b) a prestrengthening arrangement such as a calender (5),
c) a possibly directly communicating arrangement (6) for applying a layer of pulp fibres (wood pulp) to the prestrengthened, such as calendered, non-woven fabric,
d) a hydraulic needle-punching arrangement (7),
e) a drier (8), and
f) possibly an additional calendering arrangement (15, 16).

9. Apparatus according to claim 8, **characterised in that** it is supplemented by:
g) a carded non-woven fabric layering arrangement (10), for an additional,
h) possibly prestrengthened, calendered cover layer (12) on the wood pulp layer of the composite non-woven fabric mentioned in c), which then communicates with the hydraulic needle-punching arrangement (7; 13, 14) mentioned in d).

## Revendications

1. Procédé pour la fabrication d'un voile composite destiné à recevoir et collecter des liquides ou assimilés, constitué d'un voile de carde traité en vue de la consolidation et d'une couche de cellulose appliquée sur le voile de carde consolidé, comme une couche de cellulose en fibres de pulpe de bois mise en contact fixe avec le voile de carde, **caractérisé en ce que** le voile de carde est pré-consolidé à sec avant d'être enduit avec un matériau super-absorbant, la couche constituée de fibres de cellulose est ensuite appliquée sur le voile de carde pré-consolidé et tout est relié.

2. Procédé selon la revendication 1, **caractérisé en ce que** la pré-consolidation est effectuée avec de l'air comprimé.

3. Procédé selon la revendication 1, **caractérisé en ce que** la pré-consolidation a lieu par calandrage.

4. Procédé selon la revendication 1 - 3, **caractérisé en ce que** la pré-consolidation du voile de carde n'a lieu qu'en liant légèrement les fibres du voile de carde.

5. Procédé selon la revendication 1 ou 4, **caractérisé en ce que** la liaison de la couche de fibres de cellulose avec le voile de carde est effectuée par aiguilletage hydrodynamique et le voile composite est ensuite séché. bois du voile composite désigné sous c), qui est ensuite raccordé à l'installation d'aiguilletage hydraulique citée sous d).

6. Procédé selon une des revendications 1 - 5, **caractérisé en ce qu'**une troisième couche a été appliquée sur la couche de pulpe de bois, comme couche de recouvrement constituée de fibres de carde et tout est injecté en vue de la liaison par aiguilletage hydrodynamique.

7. Procédé selon une des revendications 1 - 6, **caractérisé en ce que** le voile composite séché est à nouveau calandré, mais avec plus d'énergie.

8. Dispositif de réalisation du procédé selon une des revendications 1 - 7, **caractérisé en ce que** le dispositif continu est constitué
a) d'une installation d'application du voile de carde (1 - 4),
b) d'une installation de pré-consolidation comme un calandre (5),
c) d'une installation (6) se raccordant directement, le cas échéant, et destiné à appliquer une couche de fibres de cellulose (pulpe de bois) sur le voile pré-consolidé comme calandré,
d) d'une installation d'aiguilletage hydraulique (7),
e) d'un séchoir (8) et
f) le cas échéant, d'une installation de calandrage supplémentaire (15, 16).

9. Dispositif selon la revendication 8, **caractérisé en ce qu'**il est complété par
g) d'une installation de fixation du voile de carde (10), pour une autre
h) couche de recouvrement calandrée (12) et, le cas échéant, pré-consolidée sur la couche de pulpe de
